Europäisches Patentamt

European Patent Office

Office européen des brevets

(11) Publication number: **0 271 998 B1**

# EUROPEAN PATENT SPECIFICATION

(45) Date of publication of patent specification: **10.06.92**　(51) Int. Cl.⁵: **C10G 9/16**, C23F 15/00

(21) Application number: **87310067.1**

(22) Date of filing: **13.11.87**

(54) **Antifoulant compositions and their use.**

(30) Priority: **18.12.86 US 944159**

(43) Date of publication of application:
**22.06.88 Bulletin 88/25**

(45) Publication of the grant of the patent:
**10.06.92 Bulletin 92/24**

(84) Designated Contracting States:
**AT BE DE FR GB IT NL**

(56) References cited:
AU-A- 67 045　　　DE-A- 2 145 290
US-A- 3 135 729　　US-A- 3 405 054
US-A- 3 776 835　　US-A- 4 024 051
US-A- 4 578 178

HYDROCARBON PROCESSING, vol. 55, no. 7,
July 1976, pages 161-162, Gulf Publishing
Comp., Houston, US; J.J. PERUGINI et al.:
"More about antifoulants"

(73) Proprietor: **BETZ EUROPE, INC.**
**4636 Somerton Road**
**Trevose Pennsylvania 19047(US)**

(72) Inventor: **Forester, David Roger**
**44, North High Oaks Circle**
**The Woodlands Texas 77380(US)**

(74) Representative: **Gore, Peter Manson et al**
**W.P. THOMPSON & CO. Coopers Building**
**Church Street**
**Liverpool L1 3AB(GB)**

## Description

The present invention relates to compositions and methods for providing antifouling protection for hydrocarbon media during processing thereof at elevated temperatures. The compositions and methods also serve to deactivate metals in contact with such process streams, inhibit oxidation of the process fluid, and inhibit corrosion of the metallurgy in contact with the process fluid.

In the processing of petroleum hydrocarbons and feedstocks such as, for example, crude oil and petroleum processing intermediates, and petrochemicals and petrochemical intermediates, e.g., gas, oils and reformer stocks, chlorinated hydrocarbons and olefin plant fluids such as, for example deethanizer bottoms, the hydrocarbons are commonly heated to temperatures of 38°C to 538°C (100 to 1000°F). Similarly, such petroleum hydrocarbons are frequently employed as heating mediums on the "hot side" of heating and heat exchange systems such as, for example, vacuum tower bottoms and slurry systems. In both instances, the petroleum hydrocarbon liquids are subjected to elevated temperatures which produce a separate phase known as fouling deposits, within the petroleum hydrocarbon. In all cases, these deposits are undesirable by-products. In many processes, the deposits reduce the bore of conduits and vessels to impede process throughput, impair thermal transfer, and clog filter screens, valves and traps. In the case of heat exchange systems, the deposits form an insulating layer upon the available surfaces to restrict heat transfer and necessitate frequent shut-downs for cleaning. Moreover these deposits reduce throughput, which of course, results in a loss of capacity with a drastic effect in the yield of finished product. Accordingly, these deposits have caused considerable concern to the industry.

Organic foulants are usually higher molecular weight materials ranging in consistency from that of tar to rubber to "popcorn" to "coke". The exact composition of such foulants is difficult to identify.

One particular troublesome type of organic fouling is caused by the formation of polymers that are insoluble in the hydrocarbon or petrochemical fluid being processed. The polymers are usually formed by reactions of unsaturated hydrocarbons, although any hydrocarbon can polymerize. Generally, olefins tend to polymerize more readily than aromatics, which in turn polymerize more readily than paraffins. Trace organic materials containing heteroatoms such as, for example, nitrogen oxygen and sulfur also contribute to polymerization.

Polymers are formed by free radical chain reactions. These reactions, shown below, consist of two phases, an initiation phase and a propagation phase. In reaction 1, the chain initiation reaction, a free radical represented by R·, is formed (the symbol R can be any hydrocarbon). These free radicals, which have an odd electron, act as chain carriers. During chain propagation, additional free radicals are formed and the hydrocarbon molecules (R) grow larger and larger (see reaction 2c), forming the unwanted polymers which accumulate on heat transfer surfaces.

Chain reactions can be triggered in several ways. In reaction 1, heat starts the chain. Example: when a reactive molecule such as, for example, an olefin or a diolefin is heated, a free radical is produced. Another way where a chain reaction starts is shown in reaction 3. Here metal ions initiate free radical formation. Accelerating polymerization by oxygen and metals can be seen by reviewing reactions 2 and 3.

1. Chain Initiation

$$R\text{-}H \rightarrow R\cdot + H$$

2. Chain Propagation

a. $R\cdot + O_2 \rightarrow R\text{-}O\text{-}O\cdot$
b. $R\text{-}O\text{-}O\cdot + R'\text{-}H \rightarrow R'\cdot + R\text{-}O\text{-}O\text{-}H$
c. $R\cdot + C=C \rightarrow R\text{-}C\text{-}C\cdot \rightarrow$ polymer

3. Chain Initiation

a. $Me^{++} + RH \rightarrow Me^{+} + R\cdot + H^{+}$
b. $Me^{++} + R\text{-}O\text{-}O\text{-}H \rightarrow Me^{+} + R\text{-}O\text{-}O\cdot + H^{+}$

4. Chain Termination

a. $R\cdot + R'\cdot \rightarrow R\text{-}R'$
b. $R\cdot + R\text{-}O\text{-}O\cdot \rightarrow R\text{-}O\text{-}O\text{-}R$

Research indicates that even very small amounts of oxygen can cause or accelerate polymerization. Accordingly, to inhibit this insidious fouling problem, it is highly desirable to provide a polyfunctional process antifoulant which can, among other functions, inhibit oxygen based polymerization initiation. This antioxidant function serves as a "chain-stopper" by forming inert molecules with the oxidized free radical hydrocarbons, in accordance with the following reaction:

Chain Termination

$$ROO^. + Antioxidant \rightarrow ROOH + Antioxidant^. (-H)$$

In addition to the desirability of inhibiting oxygen based polymerization, it is highly desirable to inhibit the catalytic formation of gums and other deposits, which are caused by metallic impurities, such as, for example, copper and/or iron, which may be present in the process fluids. These types of antifoulants are referred to as "metals coordinators" or "metal deactivators" and function by the formation of a complex or ligand with the metallic impurity in the process fluid.

Unlike organic deposits, inorganic deposits can be simple to identify. One example is ammonium chloride formed as the reaction product of injected ammonia in a crude overhead system. Other inorganic deposits include (e.g., metallic salts, oxides and sulfides) of iron, copper and vanadium. Such deposits may be present in the original feed as "ash" or they may be the result of corrosion or precipitation in equipment where fouling is evident. In some cases, fouling and corrosion may be related in that solving the corrosion problem which exists upstream may improve the downstream fouling problem.

As to the problem of corrosion, the root of this problem is usually attributed to HCl or $H_2S$ contamination of the aqueous phase that is entrained in the process fluid. Other acids such as carbonic acid may also exacerbate the corrosion problem.

Corrosive attack on the metals normally used in the low temperature sections of a refinery processing system, i.e., where water is present below its dew point, is an electrochemical reaction, generally in the form of acid attack on active metals as shown in equation 1.

(1) At the anode    $Fe \rightarrow Fe^{++} + 2(e)$
(2) At the cathode    $2H^+ + 2(e) \rightarrow 2H$
(2a) $2H \rightarrow H_2$

Equation 2 expresses the reduction of hydrogen ions to atomic hydrogen. The rate of the cathodic reaction generally controls the overall corrosion rate.

The aqueous phase is simply water entrained in the hydrocarbons being processed and/or water added to the process for such purposes as steam stripping. Acidity of the condensed water is due to dissolved acids in the condensate, principally HCl and $H_2S$. The HCl is formed by hydrolysis of calcium and magnesium chlorides originally present in the brines produced concomitantly with the hydrocarbons - oil, gas, condensates.

The bulk of these brines is separated at the field production facilities. Most of what remains after field separation is removed by desalting equipment at the refinery, upstream of the crude still and subsequent processing units.

Even under the best of conditions, however, a small amount of salt, several pounds per thousand barrels of charge (ptb expressed as NaCl) will reach the crude still. A portion of this, principally the chlorides of calcium and magnesium, decompose to give gaseous HCl which dissolves in overhead condensates and forces the pH down as low as 2 to 3, which is severely corrosive to steel equipment. With sour crudes, an additional corrodent is $H_2S$, either originally present in the sour oil, gas or condensate production and/or formed at processing temperatures by decomposition of sulfur compounds in the charge stocks. Certain sulfur compounds, such as low-molecular-weight, water-soluble mercaptans may also be corrodents.

There are many areas in the hydrocarbon processing industry where antifoulants have been used successfully; the main treatment areas are discussed below.

In a refinery, the crude unit has been the focus of attention, primarily because fuel use directly impacts on processing costs. Antifoulants have been successfully applied at the exchangers; downstream and upstream of the desalter, on the product side of the preheat train, on both sides of the desalter makeup water exchanger, and at the sour water stripper.

Hydrodesulfurization units of all types experience preheat fouling problems. Among those that have been successfully treated are reformer pretreaters processing both straight run and coker naphtha, desulfurizers processing catalytically cracked and coker gas oils, and distillate hydrotreaters. In one case, fouling of a Unifiner stripper column was solved by applying a corrosion inhibitor upstream of the problem source.

Unsaturated and saturated gas plants (refinery vapor recovery units) experience fouling in the various fractionation columns, reboilers and compressors. In some cases, a corrosion controlk program along with the antifoulant program gave the best results. In other cases, antifoulants along were enough to solve the problem.

Cat cracker preheat exchanger fouling, both at the vacuum column and at the cat cracker itself, has also been corrected by the use of antifoulants.

In heavy oil treating and cracking units, fouling of preheat trains of the vacuum tower bottoms feedstock has been successfully reduced by antifoulants.

In petrochemical plants, the two most prevalent areas for fouling problems are ethylene and styrene plants. In an ethylene plant, the furnace gas compressors, the various fractionating columns and reboilers are subject to fouling.

In butadiene plants, absorption oil fouling and distillation column and reboiler fouling have been corrected with various types of antifoulants.

Chlorinated hydrocarbon plants, such as VCM, EDC and perchloroethane and trichloroethane have also experienced various types of fouling problems.

The present invention is directed toward multifunctional antifoulant methods and compositions which are useful in controlling fouling encountered in the petroleum and petrochemical systems above-identified. More specifically, these compositions and methods, due to their multifunctional characteristics, may be applied effectively to inhibit fouling caused by oxygen-based free radical formation, metal catalysis, corrosion and polymer aggregation.

Use of polyalkenylthiophosphonic acids as process stream antifoulants is disclosed in US-A- 3 405 054 (Arkis et al). Further, certain polyalkenylthiophosphonic acid compounds and certain alcohol and glycol esters thereof are disclosed in US-A-3 281 359 (Oberender et al) as being useful "detergent-dispersant additives in lubricating oil, particularly petroleum lubricating oil" see Col. 1, lines 20-21. In contrast, the present invention utilizes these compounds to inhibit fouling in petroleum hydrocarbons or petrochemicals and studies have shown that many compounds known to be useful as lubricating oil detergent-dispersants do not adequately function as process antifoulants.

Alkaline earth metal salts of hydrocarbon thiophosphonic acids and the use of such salts in the formation of lubricant oil dispersion formulation is disclosed in US-A- 3 135 729 (Kluge et al).

Of somewhat lesser interest is thought to be US-A-3 123 630 (Oberender et al) which relates to a process for preparing monohydroxyalkyl hydrocarbyl thiophosphonates by reacting hydrocarbyl thiophosphonic acids with alkylene oxides in the absence of a catalyst.

Other patents which may be of interest to the present invention include: US-A- 4 024 051 (Shell) disclosing the use of inorganic phosphorus containing acid compounds and/or salts thereof as antifoulants; US-A- 3 105 810 (Miller) disclosing oil soluble alkaryl sulfur containing compounds as antifoulants; US-A-4 107 030 (Slovinsky et al) disclosing sulfanilic acid amine salt compounds as antifoulants; US-A- 3 489 682 (Lesuer) disclosing methods for preparing metal salts of organic phosphorus acids and hydrocarbon substituted succinic acids; and US-A- 2 785 128 (Popkin) disclosing methods for preparing metal salts of acidic-phosphorus-containing organic compounds.

US-A- 3 437 583 (Gonzalez); US-A- 3 567 623 (Hagney); US-A- 3 217 296 (Gonzalez); US-A- 3 442 791 (Gonzalez); US-A- 3 271 295 (Gonzalez); US-A-3 201 438 (Reed); US-A- 3 301 923 (Skovronek); US-A-3 489 682 (Lesuer); US-A- 4 024 049 (Shell); and US-A- 4 105 540 (Weinland) may also be mentioned as being of possible interest.

In AU-A- 067045 there are disclosed compositions for controlling the formation of fouling deposits in a hydrocarbon oil which may be heated to elevated temperatures. Such compositions are based upon particular mixtures of alkaline earth metal salts of acidic phosphorized substantially aliphatic hydrocarbons. Other additives may be present, including phenolic compounds.

According to the present invention there is provided a composition for controlling the formation of fouling deposits in a petroleum feedstock during processing thereof at elevated temperatures which comprises an alcohol or glycol ester of a polyalkenylthiophosphonic acid;

and at least one antifouling component selected from
(a) phenylene diamine compounds,
(b) tetrahydropyrimidines,
(c) tallow polyamidoamines,

4

(d) N,N-salicylidene-1,2-cyclohexane diamine, and

(e) reaction products of alkylphenols/aldehydes/ polyamines.

The present invention also provides a method for controlling the formation of fouling deposits in a petroleum feedstock during processing thereof at elevated temperatures which comprises dispersing within the petroleum feedstock 0.5 to 10,000 parts of a composition according to the present invention, based upon one million parts of the petroleum feedstock.

The use of polyalkenylthiophosphonic acids and alcohol/polyglycol esters thereof as process antifoulants is disclosed in US-A- 4 578 178 (Forester), which is assigned to the Applicant for the present Application and also of which the inventor is the inventor of the present Application. As the present invention utilizes esters of these particular acids as the basic antifoulant component of the multifunctional compositions, the invention herein is viewed as being an improvement over the invention disclosed in US-A-4 578 178.

Preparative routes for synthesizing the polyalkenylthiophosphonic acids and alcohol/glycol esters may be seen in aforementioned US-A- 4 578 178. These polymers may be prepared by reacting alkenyl polymers (such as, for example, polyethylene, polypropylene, polyisopropylene, polyisobutylene, polybutene or copolymers comprising such alkenyl repeat unit moieties) with $P_2S_5$ (at about 5 to 40 wt.percent of the reaction mass) at a temperature of from about 100 to about 320°C in the presence of about 0.1 to 5.0 wt.percent sulfur.

The resulting reaction mixture is then diluted with mineral oil and is then steam hydrolyzed. If desired, the hydrolyzed polyalkenyl - $P_2S_5$ reaction product may then be esterified by further reaction with lower alkyl ($C_1$ - $C_5$) alcohols such as, for example, methanol, ethanol, propanol, or butanol or with a polyglycol such as, for example, hexylene glycol or pentaerythritol.

It is highly desirable to employ, as a precursor material, an alkenyl polymer having an average molecular weight of between about 600 and 5,000.

A polyglycol ester or an alkyl (preferably lower alkyl of 1 to 5C) alcohol ester of the polyalkenylthiophosphonic acid may be used. Examples of the polyglycol esters are the pentaerythritol ester and the hexylene glycol ester. An example of a lower alcohol ester is the n-butanol ester.

The polyalkenylthiophosphonic acid may be polyisobutenylthiophosphonic acid.

At present, the reaction product preferred for use as the basic antifouling component (1) of the composition of the present invention is the pentaerythritol ester of polyisobutenylthiophosphonic acid. This particular ester is commercially available and is hereinafter referred to as PETPA. The polyisobutenyl moiety of PETPA has been reported as having an average molecular weight of about 1300.

PETPA is prepared by mixing polyisobutene (average molecular weight of 750 to 2000 with $P_2S_5$ - (polybutene - $P_2S_5$ molar ratio of 0.9 to 1.25) in the presence of sulfur at 149°C to 316°C (300 to 600°F) until the reaction product is soluble in n-pentane. The product is diluted with paraffin base distillate, steamed for 4 to 10 hours at 177°C to 191°C (350 to 375°F), then dried with $N_2$ at 177°C to 191°C (350 to 375°F). The product is extracted with 50 to 100% by volume of methanol at 24°C to 66°C (75 to 150°F) to leave a lubricating oil raffinate containing a polyisobutenylthiophosphonic acid. This material is reacted with pentaerythritol to yield PETPA.

As reported US-A- 4 578 178, the hexylene glycol ester of polyisobutenylthiophosphonic acid was prepared as follows:

330 g. of polyisobutenylthiophosphonic acid (0.1 mole), (MW of isobutenyl moiety ≈ 1300) 11.8 g. of hexylene glycol (0.1 mole) and 100 g. of xylene were added to a 500 mL reaction kettle equipped with thermometer, traps, condenser and drying tube. The mixture was slowly heated to reflux (≈ 150°C) and maintained for about two hours. After this, the temperature was slowly increased. Between about 138°-176°C, liquids starting to condense in the traps leaving hexylene glycol ester of polyisobutenylthiophosphonic acid (HGETPA) in the flask. This product was analyzed for residual alcohol and none was detected.

As also reported in US-A- 4 578 178, the n-butanol ester of polyisobutenylthiophosphonic acid was prepared in accordance with the following:

330 g. of polyisobutenylthiophosphonic acid (0.1 mole), (MW of isobutenyl moiety ≈ 1300) 7.4 g. n-butanol (0.1 mole) and 100 g. xylene were added to a 500 mL reaction kettle equipped with thermometer, traps, ice condenser, and drying tube.

The mixture was heated to reflux slowly over about a two hour period. Condensates were caught in the trap, with the resulting n-butanol ester of polyisobutenylthiophosphonic acid (BETPA) remaining in the reaction kettle. This product was analyzed for residual alcohol and none was detected.

Additional antifouling components may comprise (a) phenylenediamine compounds. Examples of such compounds are N-phenyl-N'(1,3-dimethylbutyl)-p-phenylenediamine, N-phenyl-N'(1,4-dimethylpentyl)-p-phenylenediamine, or N-phenyl-N'(1,4-dimethylpropyl)-p-phenylenediamine; such compounds inhibit oxygen based polymerization in petrochemical or hydrocarbon process streams and may be considered as antioxidants.

Also, additional antifoulant components may comprise (b) tetrahydropyrimidines and/or (c) tallow polyamidoamines. Such compounds (b) and (c) may be considered as corrosion inhibiting compounds.

Still further additional antifoulant components may comprise (d) (1) N,N'-disalicylidene-1,2-cyclohexandediamine, and/or (e) (4) reaction products of alkylphenol/aldehyde/polyamines such as, for example, nonylphenol, formaldehyde and ethylenediamine. Optionally, dialkyl or alkoxy phenols may be used. Such compounds (d) and (e) may be considered as to deactivate metals such as copper and iron which would otherwise catalyze polymerization of impurities in the petrochemical or hydrocarbon, leading to gums and deposit formation.

Accordingly, the multifunctional antifoulant compositions and methods comprise the alcohol or glycol ester of a polyalkenylthiophosphonic acid and an additional antifouling component(s) selected from compounds defined by the letters (a), (b), (c), (d), (e) supra. The weight ratio of the polyalkenylthiophosphonic acid ester:additional antifouling components is preferably 20 to 99.7% ester:0.3 to 80% additional antifouling components (i.e., (a), (b), (c), (d), (e) with the weight percentage equalling 100 wt %. An even more preferred range of ester: additional antifouling components is 50 to 99.7%:0.3 to 50 wt %. When, besides the ester, there are also present (a), plus (b) and/or (c), plus (d) and/or (e) are present the weight ratio of components ester:(a):(b) and/or (c): (d) and/or (e) may be from about 20 to 99.7:0.1 to 25:0.1 to 45:0.1 to 10. The compositions may be dissolved in a non-polar solvent such as, for example, aromatic naphtha or any suitable refined hydrocarbon for the purpose of providing an injectable antifoulant formulation.

The compositions may be used in any of the environments particularly described hereinabove to aid in solving or preventing the particular fouling problems therein described. Generally, they are fed to the process fluid in an amount of from 0.5 to 10,000 ppm of the composition based upon one million parts petroleum hydrocarbon or petrochemical. Preferably, the multifunctional antifoulant compositions are added in an amount of from 1 to 1,000 ppm of the composition, more preferably 1 to 500 ppm. It is noted that at least one of the components (a), (b), (c), (d) and (e) must be conjointly used with this phosphonic acid ester.

The present invention will be further illustrated by the following Examples which are included as being illustrative of the present invention.

Examples

In order to ascertain the antifoulant efficacy of the compounds of the present invention, an apparatus was used that pumps process fluid (crude oil) from a Parr bomb through a heat exchanger containing an electrically heated rod. Then the process fluid is chilled back to room temperature in a water-cooled condenser before being remixed with the fluid in the bomb. The system is pressurized by nitrogen to minimize vaporization of the process fluid.

The Dual Fouling Apparatus (DFA) used to generate the data shown in Table I contains two heated rod exchangers that are independent except for a common pump drive transmission. In the DFA tests the rod temperature was controlled at 427°C (800°F) while testing a mid-continent crude oil. As fouling on the rod occurs, less heat is transferred to the fluid so that the process fluid outlet temperature decreases. Antifoulant protection was determined by comparing the summed areas under the fouling curves of the oil outlet temperatures for control, treated and ideal (nonfouling) runs. In this method, the temperatures of the oil inlet and outlet and rod temperatures at the oil inlet (cold end) and outlet (hot end) are used to calculate U-rig coefficients of heat transfer every 30 minutes during the tests. From these U-rig coefficients, areas under the fouling curves are calculated and summed over the tests for the control and treatments. The ideal case is represented as the summed area using the highest U-rig coefficient. Comparing the areas of control runs (averaged) and treated runs vs the ideal area in the following equation results in a percent protection value for antifoulants.

$$\frac{\text{Area (treatment)} - \text{Area (control)}}{\text{Area (ideal)} - \text{Area (control)}} * 100 = \% \text{ protection}$$

Table I details the percent protections obtained on blank runs and treated runs containing varying combinations of the pentaerythritol ester of polyisobutenylthiophosphonic acid (MW polyisobutenyl moiety 1300) used as the basic antifoulant component, a phenylenediamine, specifically N'-phenyl-N' (1,3-dimethylbutyl)-p-phenylenediamine, used as the antioxidant component (a), tetrahydropyrimidene corrosion inhibitor (b) and the metal deactivator (d), N,N'-disalicylidene-1,2-cyclohexanediamine.

TABLE I

| RESULTS-427°C (800°F) ROD TEMPERATURE MID-CONTINENT CRUDE OIL | | | | | |
|---|---|---|---|---|---|
| Compound(s) Added -Active, ppm | | | | | |
| No. of Runs | (Ester) ppm | (a) ppm | (b) ppm | (d) ppm | Average Protection, % |
| 35 | 0 | 0 | 0 | 0 | 0 |
| 1 | 35 | 0 | 0 | 0 | 2 |
| 1 | 70 | 0 | 0 | 0 | 38 |
| 2 | 100 | 0 | 0 | 0 | 22 |
| 1 | 125 | 0 | 0 | 0 | 16 |
| 1 | 200 | 0 | 0 | 0 | 24 |
| 5 | 250 | 0 | 0 | 0 | 47 |
| 1 | 0 | 50 | 0 | 0 | 1 |
| 2 | 0 | 100 | 0 | 0 | -12 |
| 1 | 0 | 250 | 0 | 0 | -17 |
| 1 | 0 | 0 | 100 | 0 | 12 |
| 1 | 0 | 0 | 250 | 0 | 32 |
| 1 | 0 | 0 | 0 | 50 | -12 |
| 1 | 0 | 0 | 0 | 100 | -2 |
| 1 | 0 | 0 | 0 | 250 | 24 |
| 1 | 35 | 26 | 0 | 0 | 1 |
| 1 | 35 | 0 | 70 | 0 | 33 |
| 1 | 35 | 0 | 0 | 14 | 34 |
| 1 | 35 | 26 | 70 | 0 | 45 |
| 1 | 35 | 26 | 0 | 14 | 9 |
| 1 | 35 | 0 | 70 | 14 | 37 |
| 2 | 35 | 26 | 70 | 14 | 62 |
| 1 | 70 | 26 | 70 | 0 | 28 |
| 1 | 70 | 26 | 70 | 14 | 5 |
| 1 | 70 | 52 | 125 | 28 | 59 |
| 1 | 73 | 50 | 110 | 0 | 31 |
| 1 | 100 | 26 | 70 | 0 | 34 |
| 1 | 100 | 26 | 70 | 14 | 43 |
| 1 | 146 | 100 | 220 | 0 | 62 |
| 2 | 250 | 26 | 0 | 0 | 47 |
| 1 | 250 | 78 | 0 | 0 | 56 |
| 3 | 250 | 0 | 70 | 0 | 39 |
| 2 | 250 | 0 | 0 | 14 | 22 |
| 1 | 250 | 0 | 0 | 42 | 33 |
| 2 | 250 | 26 | 70 | 0 | 76 |
| 1 | 250 | 78 | 200 | 0 | 62 |
| 1 | 250 | 26 | 0 | 14 | 8 |
| 1 | 250 | 78 | 0 | 42 | 39 |
| 1 | 250 | 0 | 26 | 14 | 39 |
| 1 | 250 | 0 | 70 | 42 | 38 |
| 2 | 250 | 26 | 70 | 14 | 41 |

The results reported in Table I were then analyzed by multiple regression in accordance with standard procedure using the computer program available on RS/1. In this multiple regression analysis, the dosages, ppm for each component, as well as the multicomponent formulations form the independent variables X (1 to 11) and were compared with the dependent variable Y (protection). In multiple regression analysis, the observed values of the dependent variable (protection level) are assumed to have come at random from a normal distribution of Y values existing in the population at the particular observed combination of independent variables. Furthermore, all such normal distributions, at all combinations of values for the dependent variable, are assumed to have the same variance. The computational procedures required for this multiple regression analysis precluded hand calculation and this was carried out using a computer program included in RS/I distributed by Bolt, Baranek and Newman, Inc. Initially, all variables with actual data were included in the model and the sums of squares and sums of cross products were calculated for the entire matrix to obtain correlation coefficients for each variable. The program suggested which independent variables fit least in the model and the process was repeated until only those variables which exhibited a 95 + % significance level were left.

The results of the multiple regression appear in Table II and show that variables $X_1$ (ester), $X_8$ (ester + a + b) and $X_{11}$ (ester + a + b + d) exhibit greater than 95% significance in the model. The actual multiple regression equation is also shown which is 99.99% significant. The variables exhibiting less than 95% significance and thus not included in the model are also shown in Table II. However, variables $X_3$ (b), $X_8$ - (ester + a), and $X_8$ (ester + b) would be expected to approach 95% significance with additional DFA testing. This is one of several computational techniques that could be used to express formulation performance.

## TABLE II

| Variable | Fitted Value | Significance Level |
|---|---|---|
| $X_1$ (ester) | 0.062472 | 99.9% |
| $X_8$ (ester, a, b) | 0.000013 | 99.3% |
| $X_{11}$ (ester, a, b, d) | 0.000003 | 97.8% |

Equation is:

$$\% \text{ Protection} = 0.062472\ X_1 + 0.000013\ X_8 + 0.000003\ X_{11} + 10.042113$$

## VARIABLES NOT IN MODEL

| Variable Name | Significance Level |
|---|---|
| $X_2$ (a) | 18% |
| $X_3$ (b) | 84% |
| $X_4$ (d) | 11% |
| $X_5$ (2) ester, (a) | 91% |
| $X_6$ (3) ester, (b) | 72% |
| $X_7$ (4) ester, (d) | 17% |
| $X_9$ (3) (4) ester, (b), (d) | 45% |
| $X_{10}$ (2) (4) ester, (a), (d) | 37% |

The dosage in ppm of individual components and mixtures of ester + (a) + (b) and ester + (a) + (b) + (d) vs. actual protection values shown in Table I were compared to determine the existence of enhanced antifouling capability of the components. As shown in Table III, individual components, namely ester and (b) exhibited antifoulant protection while components (a) and (d) did not at dosages up to 250 ppm. The expected protection of the 3 or 4 component compounds is the additive sum of the approximate protections for each component at the dosage actually used. By comparing the actual and expected protection values for the 3 or 4 component compounds, the difference indicates the protection level which was unexpected.

TABLE III

| Compound | Concentration ppm | % Protection | | Enhancement (Actual -Expected) |
|---|---|---|---|---|
| | | Actual | Expected | |
| (ester) | 35 | 2 | - | - |
| | 70 | 38 | - | - |
| | 100 | 21 | - | - |
| | 125 | 16 | - | - |
| | 250 | 47 | - | - |
| (a) | 50 | 1 | - | - |
| | 100 | -12 | - | - |
| (b) | 100 | 12 | - | - |
| | 250 | 32 | - | - |
| (d) | 50 | -12 | - | - |
| | 100 | - 2 | - | - |
| ester + (a) + (b) | 35 + 26 + 70 | 45 | 15 | 30 |
| | 70 + 26 + 70 | 28 | 51 | -23 |
| | 73 + 50 + 110 | 31 | 51 | -20 |
| | 100 + 26 + 70 | 34 | 34 | 0 |
| | 146 + 100 + 220 | 62 | 36 | 26 |
| | 250 + 26 + 70 | 76 | 60 | 16 |
| | 250 + 78 + 200 | 62 | 57 | 5 |
| ester + (a) + (b) + (d) | 35 + 26 + 62 + 14 | 64 | 3 | 61 |
| | 35 + 26 + 70 + 14 | 58 | 3 | 55 |
| | 70 + 26 + 70 + 14 | 5 | 39 | -34 |
| | 70 + 52 + 125 + 28 | 59 | 42 | 17 |
| | 100 + 26 + 70 + 14 | 43 | 22 | 21 |
| | 250 + 26 + 70 + 14 | 41 | 48 | -7 |

The Components, namely ester, (a), (b) and (d) in Tables II and III are the same as reported for Table I.

Table IV details the percent protections obtained on blank runs and treated runs using varying combinations of:-

polyalkenylthiophosphonic component (ester),

antioxidant compound (a),

corrosion inhibiting compound (b) and/or (c), and

metal deactivator compound (d) and/or (e)

as defined hereinabove in respect of the present invention. The runs were conducted using a variety of oils and at various rod temperatures (as shown) for the DFA tests.

The particular compounds added are identified in the heading of the columns of Table IV as follows:

(Ester) pentaerythritol ester of polyisobutenylthiophosphonic acid (MW polyisobutenyl moiety 1300)

(a) phenylenediamine, specifically N'-phenyl-N'(1,3-dimethylbutyl)-p-phenylenediamine

(b) tetrahydropyrimidene

(c) tallow polyamidoamine

(d) N,N'-disalicylidene-1,2-cyclohexanediamine

(e) reaction product of an alkylphenol-aldehydepolyamine.

The compounds were added in the number of parts per million shown for each of them in Table IV.

The oils employed are identified in the columns of Table IV as follows.

(P)    Mid-Continent, U.S.A., Crude Oil

(Q)    Gulf Coast, U.S.A., Refinery Crude Oil

(R)    An alternative Gulf Coast, U.S.A, Refinery Crude Oil

(S)     An alternative Mid-Continent, U.S.A, Refinery Crude Oil
(T)     Another alternative Mid-Continent, U.S.A., Refinery Crude Oil
(U)     A further alternative Mid-Continent, U.S.A., Refinery Crude Oil.

## TABLE IV.

| OIL | Rod Set Point °C | (Ester) | (a) | (b) | (c) | (d) | (e) | % Protection |
|-----|-----------------|---------|-----|-----|-----|-----|-----|--------------|
| P | 427 | 125 | 0 | 0 | 0 | 0 | 0 | 23 (a) |
| P | 427 | 163 | 26 | 71 | 0 | 0 | 0 | 30 |
| P | 427 | 163 | 26 | 0 | 71 | 0 | 0 | 17 (b) |
| P | 427 | 244 | 39 | 0 | 109 | 0 | 0 | 49 |
| P | 427 | 63 | 52 | 110 | 0 | 28 | 0 | 31 (b) |
| P | 427 | 63 | 52 | 0 | 110 | 0 | 28 | 21 |
| P | 427 | 126 | 104 | 220 | 0 | 0 | 56 | 14 |
| P | 427 | 126 | 104 | 0 | 220 | 56 | 0 | 15 |
| Q | 428 | 250 | 0 | 0 | 0 | 0 | 0 | 63 (b) |
| Q | 482 | 63 | 52 | 110 | 0 | 28 | 0 | 43 |
| Q | 482 | 163 | 26 | 71 | 0 | 0 | 0 | 52 |
| R | 482 | 125 | 0 | 0 | 0 | 0 | 0 | 69 |
| R | 482 | 63 | 52 | 110 | 0 | 28 | 0 | 92 |
| R | 482 | 63 | 52 | 110 | 0 | 0 | 28 | 59 |
| R | 482 | 163 | 26 | 71 | 0 | 0 | 0 | 99 |
| R | 504 | 32 | 0 | 0 | 0 | 0 | 0 | 62 (b) |
| R | 504 | 32 | 26 | 55 | 0 | 14 | 0 | 72 |
| R | 504 | 32 | 26 | 55 | 0 | 0 | 14 | 69 |
| R | 504 | 32 | 26 | 0 | 55 | 0 | 14 | 69 |
| R | 504 | 82 | 13 | 35 | 0 | 0 | 0 | 99 |
| S | 399 | 125 | 0 | 0 | 0 | 0 | 0 | 15 |
| S | 399 | 250 | 0 | 0 | 0 | 0 | 0 | 52 (b) |
| S | 399 | 63 | 52 | 0 | 110 | 0 | 28 | 79 (b) |
| S | 399 | 163 | 26 | 0 | 71 | 0 | 0 | 67 |

## Table IV (Continued)

| OIL | Rod Set Point °C | (Ester) | (a) | (b) | (c) | (d) | (e) | % Protection |
|-----|------|---------|-----|-----|-----|-----|-----|------------|
| T | 504 | 125 | 0 | 0 | 0 | 0 | 0 | 98 |
| T | 504 | 63 | 52 | 0 | 110 | 0 | 28 | 99 |
| T | 504 | 163 | 26 | 0 | 71 | 0 | 0 | 99 |
| U | 427 | 250 | 0 | 0 | 0 | 0 | 0 | 77 (b) |
| U | 427 | 32 | 26 | 0 | 55 | 0 | 14 | 46 |
| U | 427 | 63 | 52 | 0 | 110 | 0 | 28 | 44 |
| U | 427 | 163 | 26 | 0 | 71 | 0 | 0 | 40 |

(a) Average of 4 runs

(b) Average of 2 runs

The data in Table I show that the two component mixtures of (1) with phenylenediamine, tetrahydropyrimidene, or N,N'-disalicylidene-1,2-cyclohexanediamine resulted in efficacious multifunctional antifoulant compositions. Similarly the data in Table I show that thee component mixtures of the ester with any two of the other three additives result in efficacious antifoulant compositions. The data in Table IV, besides showing various efficacious mixtures, does particularly confirm that mixtures of the ester with phenylenediamine and tetrahydropyrimidine are highly efficacious.

**Claims**

1. A composition for controlling the formation of fouling deposits in a petroleum feedstock during processing thereof at elevated temperatures which comprises an alcohol or glycol ester of a polyalkenylthiophosphonic acid;
    and at least one antifouling component selected from
    (a) phenylene diamine compounds,
    (b) tetrahydropyrimidines,
    (c) tallow polyamidoamines,
    (d) N,N-salicylidene-1,2-cyclohexane diamine, and
    (e) reaction products of alkylphenols/aldehydes/ polyamines.

2. A composition according to claim 1, wherein the glycol ester of the polyalkenylthiophosphonic acid is a polyglycol ester.

3. A composition according to claim 1, wherein the alcohol ester of the polyalkenylthiophosphonic acid is a lower alkyl alcohol ($C_1$-$C_5$) ester.

4. A composition according to claim 3, wherein the alcohol ester comprises an n-butanol ester.

5. A composition according to claim 2, wherein the glycol ester comprises a pentaerythritol ester.

6. A composition according to claim 2, wherein the glycol ester comprises a hexylene glycol ester.

7. A composition according to any of claims 1 to 6, wherein the alkenyl moiety of the polyalkenylthiophosphonic acid has a molecular weight of between 600 and 5000.

**8.** A composition according to any of claims 1 to 7, wherein the polyalkenylthiophosphonic acid is a polyisobutenylthiophosphonic acid.

**9.** A composition according to claim 8, wherein the molecular weight of the isobutenyl moiety of the polyisobutenylthiophosphonic acid is about 1300.

**10.** A composition according to any of claims 1 to 9, wherein a phenylene diamine compound (a) is present and comprises a compound selected from N-phenyl-N'(1,3-dimethylbutyl)-p-phenylenediamine, N-phenyl-N'(1,4-dimethylpentyl)-p-phenylenediamine, and/or N-phenyl-N'(1,3-dimethylpropyl)-p-phenylenediamine.

**11.** A composition as claimed in any of claims 1 to 10, wherein the weight ratio of the alcohol or glycol ester of the polyalkylenyl-phosphonic acid: antifouling components (a), (b), (c), (d) and (e) is 20 to 99.7%:0.3 to 80%, the weight percentage totalling 100 weight %.

**12.** A process for controlling the formation of fouling deposits in a petroleum feedstock during processing thereof at elevated temperatures which comprises dispersing within the petroleum feedstock 0.5 to 10000 parts of a composition according to any of claims 1 to 11, based upon one million parts of the petroleum feedstock.

**13.** A process according to claim 12, wherein 1 to 1000 parts of a composition according to any of claims 1 to 11 is fed to the petroleum feedstock, based upon one million parts of the petroleum feedstock.

**14.** A process according to claim 13, wherein 1 to 500 parts of a composition according to any of claims 1 to 11 is fed to the petroleum feedstock, based upon one million parts of the petroleum feedstock.

**Revendications**

**1.** Composition pour lutter contre la formation de dépôts de salissures dans une charge pétrolière pendant son traitement à des températures élevées, qui comprend un ester d'alcool ou de glycol d'un acide polyalcénylthiophosphonique,
et au moins un composant antisalissure choisi parmi
    (a) des composés de phénylènediamine,
    (b) des tétrahydropyrimidines,
    (c) des polyamidoamines dérivées de suif,
    (d) le N,N-salicylidène-1,2-diaminocyclohexane, et
    (e) des produits réactionnels d'alkylphénols/aldéhydes/ polyamines.

**2.** Composition selon la revendication 1, dans laquelle l'ester de glycol de l'acide polyalcénylthiophosphonique est un ester de polyglycol.

**3.** Composition selon la revendication 1, dans laquelle l'ester d'alcool de l'acide polyalcénylthiophosphonique est un ester d'alcool alkylique inférieur ($C_1$-$C_5$).

**4.** Composition selon la revendication 3, dans laquelle l'ester d'alcool comprend un ester de *n*-butanol.

**5.** Composition selon la revendication 2, dans laquelle l'ester de glycol comprend un ester de pentaérythritol.

**6.** Composition selon la revendication 2, dans laquelle l'ester de glycol comprend un ester d'hexylèneglycol.

**7.** Composition selon l une quelconque des revendications 1 à 6, dans laquelle le groupement alcényle de l'acide polyalcénylthiophosphonique a un poids moléculaire compris entre 600 et 5000.

**8.** Composition selon l'une quelconque des revendications 1 à 7, dans laquelle l'acide polyalcénylthiophosphonique est un acide polyisobuténylthiophosphonique.

**9.** Composition selon la revendication 8, dans laquelle le poids moléculaire du groupement isobutényle de l'acide polyisobuténylthiophosphonique est d'environ 1300.

**10.** Composition selon l'une quelconque des revendications 1 à 9, dans laquelle il y a un composé de phénylènediamine (a) qui comprend un composé choisi parmi la N-phényl-N'-(1,3-diméthylbutyl)-*p*-phénylènediamine, la N-phényl-N'-(1,4-diméthylpentyl)-*p*-phénylènediamine et/ou la N-phényl-N'-(1,3-diméthylpropyl)-*p*-phénylènediamine.

**11.** Composition selon l'une quelconque des revendications 1 à 10, dans laquelle le rapport en poids de l'ester d'alcool ou de glycol de l'acide polyalcénylthiophosphonique aux composants (a), (b), (c), (d) et (e) est de 20 à 99,7 %: 0,3 à 80 %, les pourcentages en poids s'élevant à un total de 100 % en poids.

**12.** Procédé de lutte contre la formation de dépôts de salissures dans une charge pétrolière pendant son traitement à des températures élevées, qui consiste à disperser dans la charge pétrolière 0,5 à 10 000 parties d'une composition selon l'une quelconque des revendications 1 à 11 pour un million de parties de la charge pétrolière.

**13.** Procédé selon la revendication 12, dans lequel 1 à 1000 parties d'une composition selon l'une quelconque des revendications 1 à 11 sont introduites dans la charge pétrolière pour un million de parties de la charge pétrolière.

**14.** Procédé selon la revendication 13, dans lequel 1 à 500 parties d'une composition selon l'une quelconque des revendications 1 à 11 sont introduites dans la charge pétrolière pour un million de parties de la charge pétrolière.

**Patentansprüche**

**1.** Zusammensetzung zur gesteuerten Unterdrückung der Bildung von Verschmutzungsablagerungen in Erdölmaterialien während deren Verarbeitung bei erhöhten Temperaturen, welche einen Alkohol- oder Glykolester einer Polyalkenylthiophosphonsäure
und mindestens eine Antiverschmutzungskomponente enthält, ausgewählt aus
    (a) Phenylendiaminverbindungen,
    (b) Tetrahydropyrimidinen,
    (c) Talgpolyamidoaminen,
    (d) N,N'-Salicyliden-1,2-cyclohexandiamin und
    (e) Reaktionsprodukten aus Alkylphenolen/Aldehyden/Polyaminen.

**2.** Zusammensetzung gemäß Anspruch 1, worin der Glykolester der Polyalkenylthiophosphonsäure ein Polyglykolester ist.

**3.** Zusammensetzung gemäß Anspruch 1, worin der Alkoholester der Polyalkenylthiophosphonsäure ein $(C_1$-$C_5)$-Niedrigalkylester ist.

**4.** Zusammensetzung gemäß Anspruch 3, worin der Alkoholester einen n-Butanolester umfaßt.

**5.** Zusammensetzung gemäß Anspruch 2, worin der Glykolester einen Pentaerythritester umfaßt.

**6.** Zusammensetzung gemäß Anspruch 2, worin der Glykolester einen Hexylenglykolester umfaßt.

**7.** Zusammensetzung gemäß jedem Anspruch 1 bis 6, worin der Alkenylrest der Polyalkenylthiophosphonsäure ein Molekulargewicht von 600 bis 5.000 aufweist.

**8.** Zusammensetzung gemäß jedem der Ansprüche 1 bis 7, worin die Polyalkenylthiophosphonsäure eine Polyisobutenylthiophosphonsäure ist.

**9.** Zusammensetzung gemäß Anspruch 8, worin das Molekulargewicht des Isobutenylrests der Polyisobutenylthiophosphonsäure ca. 1.300 beträgt.

10. Zusammensetzung gemäß jedem Anspruch 1 bis 9, worin eine Phenylendiaminverbindung (a) vorliegt und eine Verbindung umfaßt, ausgewählt aus N-Phenyl-N'(1,3-dimethylbutyl)-p-phenylendiamin, N-Phenyl-N'(1,4-dimethylpentyl)-p-phenylendiamin und/oder N-Phenyl-N'-(1,3-dimethylpropyl)-p-phenylendiamin.

11. Zusammensetzung gemäß jedem Anspruch 1 bis 10, worin das Gewichtsverhältnis des Alkohol- oder Glykolesters der Polyalkenylthiophosphonsäure zu Antiverschmutzungskomponenten (a), (b), (c), (d) und (e) 20 bis 99,7 % zu 0,3 bis 80 % beträgt, wobei sich die Gewichtsprozentangaben auf 100 Gew.-% ergänzen.

12. Verfahren zur gesteuerten Unterdrückung der Bildung von Verschmutzungsablagerungen in Erdölmaterialien während deren Verarbeitung bei erhöhten Temperaturen, wobei man im Erdölmaterial 0,5 bis 10.000 Teile einer Zusammensetzung gemäß jedem der Ansprüche 1 bis 11 dispergiert, bezogen auf eine Million Teile des Erdölmaterials.

13. Verfahren gemäß Anspruch 12, wobei man 1 bis 1.000 Teile einer Zusammensetzung gemäß jedem der Ansprüche 1 bis 11 dem Erdölmaterial zufügt, bezogen auf eine Million Teile Erdölmaterial.

14. Verfahren gemäß Anspruch 13, wobei man 1 bis 500 Teile einer Zusammensetzung gemäß jedem der Ansprüche 1 bis 11 dem Erdölmaterial zufügt, bezogen auf eine Million Teile Erdölmaterial.